Europäisches Patentamt

European Patent Office

Office européen des brevets

(11) Publication number: **0 572 927 A1**

## EUROPEAN PATENT APPLICATION

(21) Application number: **93108607.8**

(22) Date of filing: **27.05.93**

(51) Int. Cl.5: **C08L 83/04**

(30) Priority: **28.05.92 JP 162281/92**

(43) Date of publication of application:
**08.12.93 Bulletin 93/49**

(84) Designated Contracting States:
**DE FR GB**

(71) Applicant: **Dow Corning Toray Silicone Company Ltd.**
**3-16, Nihombashi-muromachi 2-chome,**
**Chuo-ku**
**Tokyo 103(JP)**

(72) Inventor: **Hatanaka, Hidekatsu, Main Office for Res. and Dev.**
**Toray Dow Corning Sil. Co. Ltd,**
**2-2 Chigusa Kaigan**
**Ichihara-shi, Chiba Prefecture(JP)**
Inventor: **Suganuma, Noriyuki, Main Office for Res. and Dev.**
**Toray Dow Corning Sil. Co. Ltd,**
**2-2 Chigusa Kaigan**
**Ichihara-shi, Chiba Prefecture(JP)**

(74) Representative: **Spott, Gottfried, Dr.**
**Spott Weinmiller & Partner**
**Sendlinger-Tor-Platz 11**
**D-80336 München (DE)**

(54) **Low modulus room-temperature-curable organosiloxane composition.**

(57) A room-temperature-curable organopolysiloxane composition that cures to give a low-modulus, high-elongation silicone rubber is made from hydroxyl-terminated polydiorganosiloxane, inorganic filler, organoalkoxysilane or organoalkoxypolysiloxane containing at least 3 Si-bonded alkoxy groups per molecule, organohydrogenpolysiloxane containing at least 1 Si-bonded hydrogen per molecule, and a tin catalyst.

EP 0 572 927 A1

The present invention relates to a room-temperature-curable organopolysiloxane composition that cures to give a low-modulus, high-elongation product.

Alcohol-liberating room-temperature-curable organopolysiloxane compositions composed of hydroxyl-terminated polydiorganosiloxane, organoalkoxysilane, and curing catalyst already exist. However, these compositions are known to yield high-modulus, low-elongation cured products, and it has not been practical to adjust the modulus of these prior art compositins to produce low-modulus, high-elongation silicone rubber compositions.

The present inventors developed the present invention as the result of extensive investigations into solving this problem. Accordingly, the present invention takes as its object the introduction of an alcohol-liberating room-temperature-curable organopolysiloxane composition that cures to give a low-modulus, high-elongation silicone rubber.

The present invention relates to a low modulus, high elongation room-temperature-curable organopolysiloxane composition consisting essentially of (A) 100 parts by weight hydroxyl-terminated polydiorganosiloxane that has a viscosity at 25°C within the range of 0.0001 to 1 $m^2/s$, (B) 1 to 300 parts by weight inorganic filler, (C) 0.5 to 30 parts by weight organoalkoxysilane or organoalkoxypolysiloxane, in either case that contains at least 3 Si-bonded alkoxy groups in each molecule, (D) 0.2 to 20 parts by weight polyorganohydrogensiloxane that contains at least 1 Si-bonded hydrogen in each molecule, and (E) 0.001 to 10 parts by weight tin catalyst.

The polydiorganosiloxane of component (A) used in the present invention is the base component of the silicone rubber composition. The molecular chain terminals of this polydiorganosiloxane must be endblocked with the hydroxyl group. Its viscosity must fall within the range of 0.0001 to 1 $m^2/s$ at 25°C because the cured rubber product will not have the desired low modulus at lower viscosities while the workability will be impaired at higher viscosities. The preferred viscosity range is 0.001 to 0.1 $m^2/s$.

The molecular structure of this polydiorganosiloxane is ordinarily straight chain, but it is also possible to employ straight-chain polydiorganosiloxane that contains a moderately branched moiety.

The organic groups in this polydiorganosiloxane are exemplified by alkyl groups such as methyl, ethyl, propyl, butyl, and octyl; alkenyl groups such as vinyl, allyl, and hexenyl; aryl groups such as phenyl and tolyl; and substituted alkyl groups such as 3,3,3-trifluoropropyl, 3-chloropropyl, and 3-cyanoalkyl. The polydiorganosiloxane under consideration is specifically exemplified by polydimethylsiloxanes, polymethylethylsiloxanes, polymethyloctylsiloxanes, polymethylvinylsiloxanes, polymethylphenylsiloxanes, polymethyl(3,3,3,-trifluoropropyl)siloxanes, dimethylsiloxane-methylphenylsiloxane copolymers, and dimethylsiloxane-methyl(3,3,3-trifluoropropyl)-siloxane copolymers. The hydroxyl group should be present at the molecular chain terminals of this polydiorganosiloxane, and such hydroxyl-endblocked molecular chain terminals are exemplified by the dimethylhydroxysiloxy and methylphenyl-hydroxysiloxy groups. The most preferred hydroxyl terminated polydiorganosiloxane is a hydroxyl terminated polydimethylsiloxane having a viscosity at 25°C from 0.001 to 0.1 $m^2/s$.

The inorganic filler of component (B) functions to thicken the composition and provide it with consistency. It also functions to impart mechanical strength to the cured product afforded by the composition. The inorganic filler under consideration is exemplified by alkaline-earth metal salts, inorganic oxides, metal hydroxides, and carbon black. The alkaline-earth metal salts are nonexhaustively exemplified by the carbonates, bicarbonates, and sulfates of calcium, magnesium, and barium; said inorganic oxides are exemplified by fumed silica, calcined silica, precipitated silica, quartz micropowder, titanium oxide, diatomaceous earth, alumina, and so forth; and the aforesaid metal hydroxides are exemplified by aluminum hydroxide. These inorganic fillers may be used after surface treatment with silane, silazane, low degree-of-polymerization siloxane, or an organic compound.

Component (B) should be added at 1 to 300 parts by weight per 100 parts by weight component (A). The basis for this range is as follows: the cured composition has a poor mechanical strength at an addition below 1 part by weight, while a cured product evidencing a good rubbery elasticity essentially cannot be obtained at an addition in excess of 300 parts by weight. Component (B) may consist of only a single species or of a freely selected mixture.

The preferred filler for Component (B) is microparticulate calcium carbonate with an average particle diameter not exceeding 20 micrometers. Calcium carbonate simultaneously provides the composition with suitable extrudability and suitable elastomer properties when cured. The calcium carbonate must have an average particle size which does not exceed 20 micrometers, preferably less than one micrometer. This calcium carbonate may take the form of heavy calcium carbonate, light calcium carbonate, or colloidal calcium carbonate. The surface of the calcium carbonate may be either treated or untreated, but treatment with, for example, an aliphatic acid, resin acid, or surfactant, is preferred. The more preferred fatty acid surface treated calcium carbonate is present in an amount of from 10 to 200 parts by weight. Mixtures of the preferred calcium carbonate with a reinforcing silica filler is also provides desirable properties. In this case, a fumed silica can be used.

Component (C) functions as a crosslinker for component (A) and is an organoalkoxysilane or an organoalkoxy-polysiloxane and in either case contains at least 3 silicon-bonded alkoxy groups per molecule. The alkoxy group is exemplified by methoxy, ethoxy, propoxy, butoxy, and methoxyethoxy. Component (C) is specifically exemplified by tetraalkoxysilanes such as tetramethoxysilane, tetraethoxysilane, methyl Cellosolve® orthosilicate, n-propyl orthosilicate, and so forth; trialkoxysilanes such as methyltrimethoxysilane, methyltriethoxysilane, vinyltrimethoxysilane, phenyltrimethoxy-silane, methyltrimethoxyethoxysilane, and so forth; disilaalkanes such as bis(trimethoxysilyl)ethane, bis(triethoxysilyl)-ethane, bis(trimethoxysilyl)-hexane, and so forth; and the partial hydrolysis condensation products of the preceding. A preferred tetraalkoxysilane is n-propyl orthosilicate. A preferred trialkoxysilane is methyltrimethoxysilane.

An aminoalkylalkoxysilane/epoxyalkylalkoxysilane reaction mixture preferably makes up part of component (C) when the development of adhesion for various types of substrates is required. Said aminoalkylalkoxysilane is exemplified by aminomethyltriethoxysilane, gamma-aminopropyltriethoxysilane, N-(beta-aminoethyl)aminopropyltrimethoxysilane, and gamma-anilinopropyltriethoxysilane, and the epoxyalkylalkoxysilane is exemplified by gamma-glycidoxypropyltrimethoxysilane and beta-(3,4-epoxycyclohexyl)-ethyltrimethoxysilane. The reaction mixture under consideration is readily prepared by mixing the aminoalkylalkoxysilane and epoxyalkylalkoxysilane at a molar ratio in the range of (1:1) to (1:5) and heating the mixture or holding it at room temperature.

Component (C) should be added at 0.5 to 30 parts by weight per 100 parts by weight component (A). The basis for this range is as follows: the composition will not cure satisfactorily at an addition below 0.5 part by weight , while the cured rubber will be too stiff at an addition in excess of 30 parts by weight. A preferred amount of component (C) is from 5 to 20 parts by weight per 100 parts by weight of component (A).

The organohydrogenpolysiloxane of component (D) functions to reduce the modulus and provide a high elongation for the silicone rubber obtained by curing the composition of the present invention. This organohydrogenpolysiloxane is exemplified by trimethylsiloxy-terminated methylhydrogenpolysiloxanes, trimethylsiloxy-terminated dimethylsiloxanemethyl-hydrogensiloxane copolymers, dimethylphenylsiloxy-terminated methylphenylsiloxanemethylhydrogensiloxane copolymers, cyclic methylhydrogenpolysiloxanes, and copolymers composed of dimethylhydrogensiloxy and $SiO_{4/2}$ units.

Component (D) should be added at 0.2 to 20 parts by weight per 100 parts by weight component (A). The basis for this range is as follows: the modulus of the cured rubber will not be adequately reduced at lower component (D) additions, while larger component (D) additions cause a slow curing rate and result in a reduction in the strength of the cured rubber. A preferred amount of component (D) is from 1 to 10 parts by weight per 100 parts by weight of component (A).

The tin catalyst of component (E) is a catalyst that accelerates the cure of the composition of the present invention, and it is exemplified by tin compounds such as dibutyltin dilaurate, dibutyltin dioctoate, dioctyltin dilaurate, dioctyltin maleate polymer, dibutyltin maleate ester, dibutyltin bisacetylacetate, and stannous octoate.

Component (E) should be added in the range of 0.001 to 10 parts by weight per 100 parts by weight component (A) and is preferably added at 0.01 to 5 parts by weight per 100 parts by weight component (A). The basis for this range is as follows: the addition of less component (E) results in an impractically slow curing rate, while the addition of more component (E) results in such a rapid curing rate that no working time is available.

The composition of the present invention may contain the following on an optional basis insofar as the object of the present invention is not impaired: organic solvent, trimethylsilyl-terminated polydiorganosiloxane, flame retardant, plasticizer, thixotropy agent, colorant, antimold, and so forth.

The compositions of the present invention are preferably stored in at least two packages because the presence of tin catalyst with the component (D) and component (A) results in premature reaction and potential curing. Unless the composition is to be used within a short time, component (A), component (B) and component (D) are preferably stored in one package and are often referred to as a base, and component (C) and component (E) are stored in another package and are often referred to as a catalyst. Then, when cure is desired, the contents of the two packages are mixed in weight ratios which fall within the limits setforth herein.

A method of making low modulus, high elongation silicone rubber of the present invention is to mix a base and a catalyst to provide the weight ratios as setforth herein for the components (A) through (E) and allow the resulting mixture to cure at room temperature. The mixture will cure whether or not exposed to moisture.

The present invention is explained below using illustrative examples. In the examples and comparison examples, "part" represents "parts by weight", and the viscosity is the value measured at 25°C.

EXAMPLE 1

100 parts hydroxyl-terminated polydimethylsiloxane (viscosity = 0.015 $m^2$/s), 100 parts fatty acid-treated calcium carbonate with an average particle size of 0.08 micrometers, and 2 parts trimethylsiloxy-terminated methylhydrogenpolysiloxane (viscosity = 0.00002 $m^2$/s) were mixed to homogeneity to give a mixture hereinafter designated as Base I.

100 parts n-propyl orthosilicate was mixed with 1 part dibutyltin dioctoate to give a mixture hereinafter designated as Catalyst I.

A room-temperature-curable organopolysiloxane composition was then prepared by mixing Base I with Catalyst I at a 100:5 weight ratio. This composition was formed into a 3 mm-thick sheet and cured at room temperature for 7 days. The rubber properties of this sheet were subsequently measured in accordance with JIS K 6301 with the following results: hardness (JIS A) = 17, tensile strength = 18 kg/$cm^2$, and elongation = 1,400%.

COMPARISON EXAMPLE 1

A room-temperature-curable organopolysiloxane composition was prepared as in Example 1, but in this case omitting the methylhydrogenpolysiloxane from the base used in Example 1. This composition was made into sheet as in Example 1, and the properties of this sheet were measured with the following results: hardness = 50, tensile strength = 21 kg/$cm^2$, and elongation = 350%.

EXAMPLE 2

60 parts methyltrimethoxysilane, 40 parts gamma-aminopropyltriethoxysilane/gamma-glycidoxypropyltrimethoxysi lane (molar ratio = 1:2) reaction mixture, and 1 part dibutyltin dilaurate were mixed to afford a mixture hereinafter designated as Catalyst II.

A room-temperature-curable organopolysiloxane composition was produced by mixing Base I (as prepared in Example 1) and Catalyst II in a 100:5 weight ratio. A tensile adhesion test specimen in accordance with JIS A 5758 was prepared using this composition and float glass as the adherend. The tensile adhesion test specimen was cured at 20°C for 7 days and then at 50°C for 7 days. The tensile adhesion properties were subsequently measured, and these results are reported in Table 1.

EXAMPLE 3

100 parts hydroxyl-terminated polydimethylsiloxane (viscosity = 0.050 $m^2$/s), 100 parts fatty acid-treated calcium carbonate with average particle size = 0.08 micrometers, and 5 parts trimethylsiloxy-terminated dimethylsiloxanemethylhydro-gensiloxane copolymer (viscosity = 0.00001 $m^2$/s) were mixed to homogeneity to give a mixture hereinafter designated as Base II.

A room-temperature-curable organopolysiloxane composition was then prepared by mixing Base II with Catalyst II (as prepared in Example 2) at a 100:5 weight ratio. This composition was evaluated as in Example 2, and these measurement results are reported in Table 1.

EXAMPLE 4

100 parts hydroxyl-terminated polydimethylsiloxane (viscosity = 0.015 $m^2$/s), 60 parts fatty acid-treated calcium carbonate with average particle size = 0.08 micrometers, 10 parts fumed silica (specific surface = 200 $m^2$/g) whose surface had been treated with hexamethyldisilazane, and 2 parts trimethylsiloxy-terminated methylhydrogenpolysiloxane (viscosity = 0.00002 $m^2$/s) were mixed to homogeneity to give a mixture hereinafter designated as Base III.

A room-temperature-curable organopolysiloxane composition was then prepared by mixing Base III with Catalyst II (as prepared in Example 2) in a 100:5 weight ratio. This composition was evaluated as in Example 2, and these measurement results are reported in Table 1.

4

COMPARISON EXAMPLE 2

A room-temperature-curable organopolysiloxane composition was prepared as in Example 2, but in this case omitting the methylhydrogenpolysiloxane from the base used in Example 2. This composition was evaluated as in Example 2, and these measurement results are reported in Table 1.

TABLE 1

COMPOSITIONS

| PROPERTY | EXAMPLE 2 | EXAMPLE 3 | EXAMPLE 4 | COMPARISON EX. 2 |
|---|---|---|---|---|
| 50% tensile stress (kgf/cm$^2$) | 2.0 | 2.8 | 2.5 | 9.6 |
| maximum tensile stress (kgf/cm$^2$) | 11.7 | 12.3 | 15.1 | 14.2 |
| elongation at maximum load (%) | 820 | 680 | 750 | 140 |
| cohesive failure (%) | 100 | 100 | 100 | 100 |

Because the room-temperature-curable organopoly-siloxane composition of the present invention is composed of components (A) through (E), and in particular because it contains organohydrogenpolysiloxane, it characteristically cures to give a low-modulus, high-elongation silicone rubber.

**Claims**

1. A low modulus, high elongation room-temperature-curable organopolysiloxane composition consisting essentially of
   (A) 100 parts by weight hydroxyl-terminated polydiorganosiloxane that has a viscosity at 25 °C within the range of 0.0001 to 1 m$^2$/s,
   (B) 1 to 300 parts by weight inorganic filler,
   (C) 0.5 to 30 parts by weight organoalkoxysilane or organoalkoxypolysiloxane, in either case that contains at least 3 Si-bonded alkoxy groups in each molecule,
   (D) 0.2 to 20 parts by weight organohydrogenpolysiloxane that contains at least 1 Si-bonded hydrogen in each molecule, and (E) 0.001 to 10 parts by weight tin catalyst.

2. The low modulus, high elongation room-temperature curable organopolysiloxane composition according to claim 1 in which the inorganic filler is a microparticulate calcium carbonate having an average particle diameter not exceeding 20 micrometers.

3. The low modulus, high elongation room-temperature curable organopolysiloxane composition according to claim 2 in which the calcium carbonate has its surface treated with a composition selected from aliphatic acid, resin acid, or surfactant.

4. A storage stable product comprising a first package comprising
   (A) hydroxyl-terminated polydiorganosiloxane that has a viscosity at 25 °C within the range of 0.0001 to 1 m$^2$/s,
   (B) inorganic filler, and
   (D) organohydrogenpolysiloxane that contains at least 1 Si-bonded hydrogen in each molecule, and a second package comprising
   (C) organoalkoxysilane or organoalkoxypolysiloxane, in either case that contains at least 3 Si-bonded alkoxy groups in each molecule, and

5

(E) a tin catalyst

wherein the contents of the two packages provide per 100 parts by weight of (A), 1 to 300 parts by weight of (B), 0.5 to 30 parts by weight of (C), 0.2 to 20 parts by weight of (D), and 0.001 to 10 parts by weight of (E).

5. A method of making a low modulus, high elongation silicone rubber comprising mixing the following ingredients:

(A) 100 parts by weight hydroxyl-terminated polydiorganosiloxane that has a viscosity at 25°C within the range of 0.0001 to 1 m$^2$/s,

(B) 1 to 300 parts by weight inorganic filler,

(C) 0.5 to 30 parts by weight organoalkoxysilane or organoalkoxypolysiloxane, in either case that contains at least 3 Si-bonded alkoxy groups in each molecule,

(D) 0.2 to 20 parts by weight organohydrogenpolysiloxane that contains at least 1 Si-bonded hydrogen in each molecule, and (E) 0.001 to 10 parts by weight tin catalyst.

European Patent
Office

**EUROPEAN SEARCH REPORT**

Application Number

EP    93 10 8607
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 384 609 (DOW CORNING S.A.)<br>* page 4, line 19 - line 37; claims 1,6,7,9 *<br>--- | 1-3,5 | C08L83/04 |
| Y | DE-A-3 702 839 (FUJI PHOTO FILM CO., LTD. AND SHIN-ETSU CHEMICAL CO., LTD.)<br>* claims 1,2,4,7,11,12,14,15 *<br>* page 6, line 65 - page 7, line 4 *<br>* page 7, line 14 - line 23; example 2 *<br>--- | 1-3,5 | |
| X<br>A | US-A-4 489 191 (R. H. CHUNG, DECEASED)<br><br>* claims 2,4,5,9-11 *<br>* column 3, line 55 - column 4, line 68 *<br>* column 5, line 30 - line 49 *<br>* column 6, line 22 - line 36; examples 1,5,6 *<br>--- | 1<br>2,5 | |
| A | DATABASE WPI<br>Section Ch, Week 7819,<br>Derwent Publications Ltd., London, GB;<br>Class A, AN 78-34396A<br>& JP-A-53 034 855 (SHINETSU CHEM IND KK)<br>31 March 1978<br>* abstract *<br>--- | 1,2,5 | |
| A | EP-A-0 444 633 (DOW CORNING TORAY SILICONE)<br>* page 3, line 30 - page 4, line 47; claim 2 *<br>--- | 1-3 | TECHNICAL FIELDS SEARCHED (Int. Cl.5 )<br><br>C08L |
| A | EP-A-0 036 262 (TORAY SILICONE CO., LTD.)<br>* claims 1-10 *<br>* page 8, line 2 - line 5 *<br>* page 12, line 6 - line 9 *<br>* page 12, line 19 - line 27; example 2 *<br>--- | 1-3,5 | |
| A | US-A-3 925 277 (W. R. LAMPE)<br>* column 8, line 37 - line 50; claim 1 *<br>--- | 1,2,4,5 | |

The present search report has been drawn up for all claims

| Place of search | Date of completion of the search | Examiner |
|---|---|---|
| THE HAGUE | 06 AUGUST 1993 | KANETAKIS I. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 273 705 (DOW CORNING CORPORATION) * claims 1,4-7 * | 1,5 | |

-----

TECHNICAL FIELDS SEARCHED (Int. Cl.5)

The present search report has been drawn up for all claims

| Place of search | Date of completion of the search | Examiner |
|---|---|---|
| THE HAGUE | 06 AUGUST 1993 | KANETAKIS I. |

EPO FORM 1503 03.82 (P0401)